# EUROPEAN PATENT APPLICATION

(11) **EP 2 899 953 A2**
(43) Date of publication of application: **29.07.2015**
(21) Application number: 15152003.8
(22) Date of filing: 21.01.2015
(51) Int. Cl.: H04M 1/60, H04M 19/04, H04M 1/725

(54) **NOTIFICATION DEPENDENT ON RUNNING APPLICATIONS**

(30) Priority: 24.01.2014 JP 2014011875
(71) Applicant: FUJITSU LIMITED, Kawasaki-shi, Kanagawa 211-8588 (JP)
(72) Inventor: Miura, Masaki, Kawasaki-shi, Kanagawa 211-8588 (JP)
(74) Representative: Ward, James Norman

(57) **Abstract**

An electronic apparatus (100) includes a communication circuitry (2) that performs communication with a communication apparatus (200) a memory, and a processor (3) coupled to the memory, configured to perform information processing, and perform, when the processor (3) receives a signal relating to a first operation different from a signal relating to a second operation for performing confirmation of unconfirmed information that is information unconfirmed by a user from within the information processing from the communication apparatus (200) through the communication circuitry (2), selection of whether control for causing the communication apparatus (200) to issue an audio notification of the unconfirmed information is to be performed or control for causing the communication apparatus (200) to display the unconfirmed information on a screen of the communication apparatus (200) is to be performed on the basis of contents of the first operation.

## Description

### FIELD

The embodiments discussed herein are related to an electronic apparatus, and a notification method.

### BACKGROUND

Among electronic apparatuses utilized by users such as portable information terminals and tablet computers, some electronic apparatuses have a function for notifying a user of unconfirmed information. Such electronic apparatuses urge a user to confirm unconfirmed information, for example, utilizing a function for blinking light emitting diode (LED) light at a fixed period, another function for performing, when a user operates the electronic apparatus to display a screen image, popup display relating to the notification or a like function.

The unconfirmed information signifies information with regard to which a user is to perform a confirmation operation but does not perform the confirmation operation as yet. The unconfirmed information includes, for example, unattended incoming call information, message information of an answering machine, unread information of an electronic mail, information of a notification received from an application and like information.

In recent years, some electronic apparatuses such as portable information terminals have a communication function for performing transmission and reception of data to and from a communication apparatus such as a vehicle onboard unit or a headset having an audio communication function. Therefore, a user may not directly operate the portable information terminal but may perform a music reproduction operation, an audio communication operation or the like at the communication apparatus side.

In such a case as just described, since the user does not directly operate the portable information terminal, the user may not perceive a notification of unconfirmed information of the portable information terminal.

Japanese Laid-open Patent Publication No. 2010-74215 discloses a vehicle onboard unit that can communicate with a portable information terminal. According to the vehicle onboard unit, when communication with the portable information terminal is established, if unconfirmed information with regard to which a user has not performed a confirmation operation on the portable information terminal is acquired from the portable information terminal, then the vehicle onboard unit displays the unconfirmed information on a screen. For example, the technology is disclosed in Japanese Laid-open Patent Publication No. 2010-74215, Japanese Laid-open Patent Publication No. 2003-208189, and Japanese Laid-open Patent Publication No. 2008-65602.

### SUMMARY

According to an aspect of the invention, An electronic apparatus includes a communication circuitry that performs communication with a communication apparatus a memory, and a processor coupled to the memory, configured to perform information processing, and perform, when the processor receives a signal relating to a first operation different from a signal relating to a second operation for performing confirmation of unconfirmed information that is information unconfirmed by a user from within the information processing from the communication apparatus through the communication circuitry, selection of whether control for causing the communication apparatus to issue an audio notification of the unconfirmed information is to be performed or control for causing the communication apparatus to display the unconfirmed information on a screen of the communication apparatus is to be performed on the basis of contents of the first operation.

### BRIEF DESCRIPTION OF DRAWINGS

FIG. 1 is a schematic view of a hardware configuration of a portable information terminal and a communication apparatus according to a first embodiment;
FIG. 2 is a functional block diagram of a portable information terminal;
FIG. 3 is an example of a table depicting a correspondence relationship between operations performed by a user using a communication apparatus and situations of the user;
FIG. 4 is an example of a flow chart illustrating an information process of a portable information terminal according to the first embodiment;
FIG. 5 is an example of a flow chart illustrating an information process of a communication apparatus according to the first embodiment;
FIG. 6 is another example of a flow chart illustrating an information process of a portable information terminal according to the first embodiment;
FIG. 7 is an example of a flow chart illustrating an information process of a portable information terminal according to a second embodiment; and
FIG. 8 is an example of a flow chart illustrating an information process of a communication apparatus according to the second embodiment.

### DESCRIPTION OF EMBODIMENTS

In the following, a working example of an electronic apparatus and a notification method according to an embodiment is described in detail with reference to the drawings. It is to be noted that the working example does not restrict the disclosed embodiment.

In Patent Document Japanese Laid-open Patent Publication No. 2010-74215 described hereinabove, it is described that a communication apparatus such as a personal computer (of the portable type) or a vehicle onboard unit displays unconfirmed information on a screen when communication is established with a portable information terminal. However, even if the unconfirmed information is displayed, for example, where the communication apparatus is a vehicle onboard unit, in such a case that the user has already started driving of the vehicle or in a like case, the user cannot still confirm the unconfirmed information. The subject just described is not limited to a case in which the communication apparatus is a vehicle onboard unit, but in another case in which the communication apparatus is a personal computer, a telephone answering machine or a like apparatus, even if unconfirmed information is displayed in a situation in which the user does not see the screen, a similar subject occurs apparently.

The present embodiment has been created taking the problems described above into consideration and is capable of enhancing the certainty in causing a user to confirm unconfirmed information of a portable information terminal through a communication apparatus that communicates with the portable information terminal.

(Portable information terminal incorporating a short-range wireless communication function)

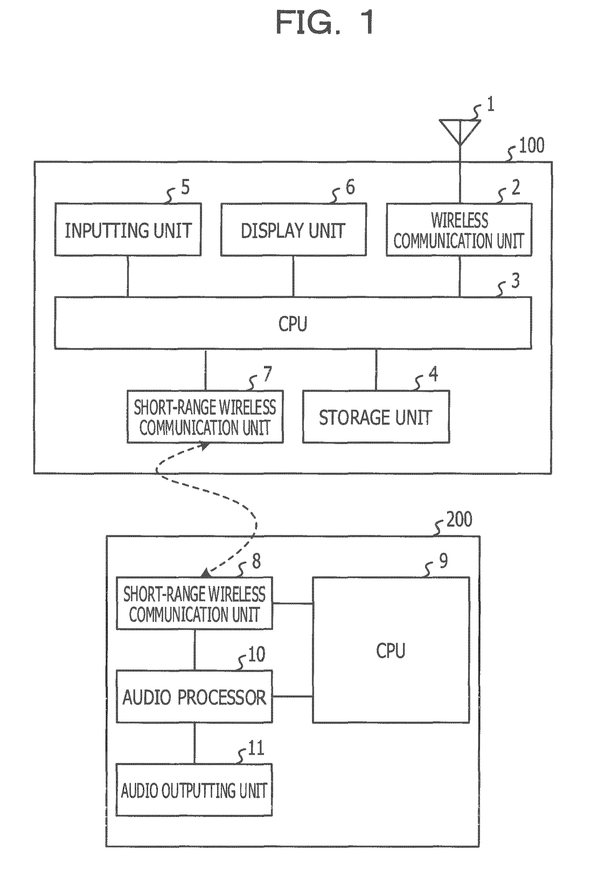

A portable information terminal that incorporates a short-range wireless communication function and a communication apparatus that incorporates a short-range wireless communication function are described with reference to FIG. 1. The portable information terminal is, for example, a portable information terminal including a portable telephone terminal such as a smartphone or a feature phone or a tablet computer.

FIG. 1 is a schematic view of a hardware configuration of a portable information terminal and a communication apparatus according to a first embodiment. As depicted in FIG. 1, a portable information terminal 100 includes, as hardware components thereof, a wireless communication unit 2 in the form of a radio frequency (RF) circuit coupled to an antenna 1, a central processing unit (CPU) 3, a storage unit 4, an inputting unit 5 such as a touch panel or a keyboard, a display unit 6 such as a display unit, and a short-range wireless communication unit 7 that performs Bluetooth (registered trademark) communication. The hardware modules mentioned are coupled to each other, for example, by a bus.

The storage unit 4 has stored therein various programs to be read out and executed by the CPU 3 and data to be utilized by the programs. The storage unit 4 may be configured using, for example, a random access memory (RAM) or a like memory. The programs include, for example, application programs and an operating system (OS) to be executed by the portable information terminal 100. The display unit 6 is controlled by the CPU 3 and displays screen image information to a user.

A communication apparatus 200 may be a headset or an earphone of the non-wired connection type (wireless connection type) to a portable information terminal, a car navigation system or a like apparatus. The communication apparatus 200 includes, as hardware components thereof, a short-range wireless communication unit 8 that performs Bluetooth (BT) communication, a CPU 9, an audio processor 10 connected to the CPU 9 and configured to perform audio processing, and an audio outputting unit 11 such as a speaker. The short-range wireless communication unit 7 of the portable information terminal 100 and the short-range wireless communication unit 8 of the communication apparatus 200 perform mutual communication of Bluetooth commands to perform music reproduction instruction, music reproduction data transmission and reception, audio communication instruction, audio communication data transmission and reception, information notification instruction and so forth.

### (Software configuration of the portable information terminal 100)

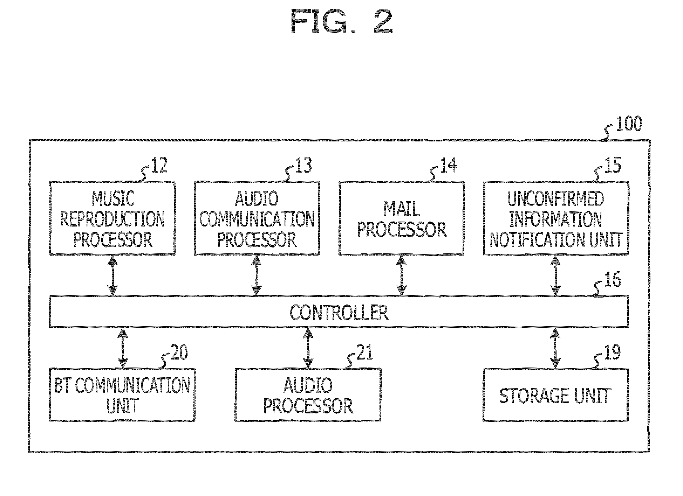

FIG. 2 is a functional block diagram of a portable information terminal. The portable information terminal depicted in FIG. 2 may be the portable information terminal 100 depicted in FIG. 1.

As depicted in FIG. 2, the portable information terminal 100 according to the present embodiment includes a music reproduction processor 12, an audio communication processor 13, a mail processor 14, an unconfirmed information notification unit 15, and a controller 16. The music reproduction processor 12 performs such processing as reproduction and stopping of music, and the audio communication processor 13 performs processing relating to audio communication. The mail processor 14 performs processing relating to transmission and reception of an electronic mail. The unconfirmed information notification unit 15 performs a notification process of unconfirmed information whose confirmation operation by a user is requested but has not been performed as yet by the user from within unattended incoming communication information relating to audio communication, message information of an answering machine, unread information of an electronic mail, information included in a notification from an application and like information. The controller 16 controls the music reproduction processor 12, audio communication processor 13, mail processor 14 and unconfirmed information notification unit 15. The functions described are implemented by the CPU 3 executing the various programs stored in the storage unit 4. The portable information terminal 100 further includes a storage unit 19, a Bluetooth communication unit 20 and an audio processor 21. The storage unit 19 has stored therein music data to be used for a music reproduction process, unattended incoming communication information, message information, unread mail information and notification information from other applications. The BT communication unit 20 accepts an instruction from the controller 16 and performs processing relating to BT communication. The audio processor 21 accepts an instruction from the controller 16 and processes audio data and music data.

### (Description of the unconfirmed information notification method)

According to the present embodiment, a notification of unconfirmed information is issued in response to a situation of a user so that the user may confirm the unconfirmed information with a higher degree of certainty. Situations of a user in which the user uses an electronic apparatus such as a portable information terminal and a communication apparatus and operations to be performed by the user are associated with each other such that, when a particular operation is performed, a notification of unconfirmed information is issued.

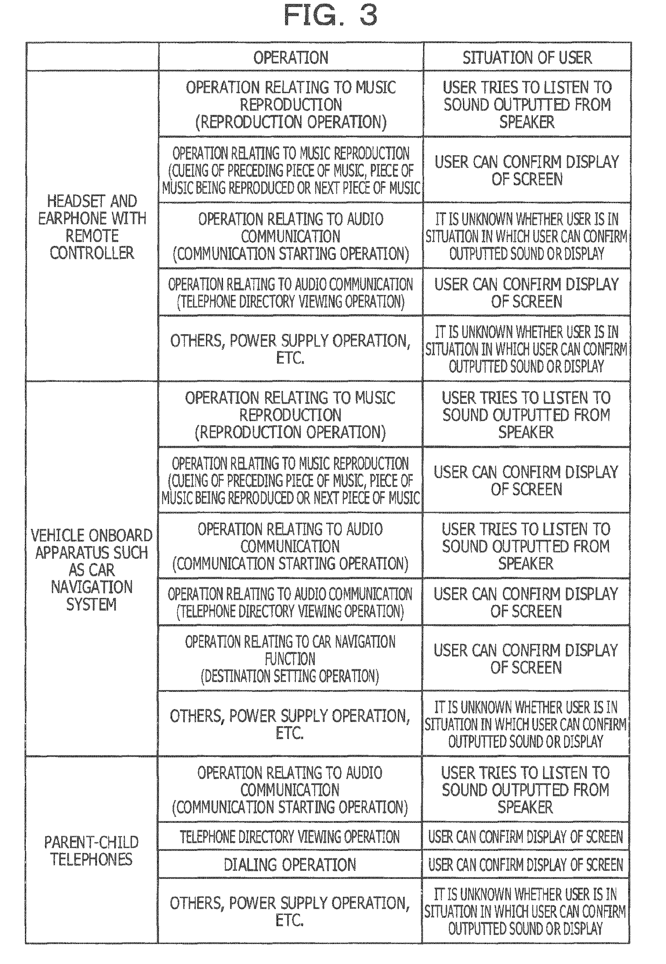

FIG. 3 is an example of a table depicting a correspondence relationship between operations performed by a user using a communication apparatus and situations of the user

In FIG. 3, it is assumed that a headset and an earphone with a remote control function, a vehicle onboard apparatus such as a car navigation system or a cordless handset of parent-child telephones is used as the communication apparatus.

As operations to be performed by a user using a headset and an earphone with a remote control function, an operation relating to reproduction of music and an operation relating to audio communication are available. The operation relating to music reproduction includes reproduction of music data, cueing of a preceding piece of music, a piece of music being reproduced or a next piece of music, and so forth. The reproduction operation is an operation performed by the user to enjoy music, and when the reproduction operation is performed, there is a high possibility that the user may be in a situation in which the user is going to enjoy sound outputted from a speaker of the headset or the earphone. When the cueing operation of a preceding piece of music, a piece of music being reproduced or a next piece of music is performed, there is a high possibility that the user may be in another situation in which the user tries to confirm a display image on a display screen provided on the headset or the earphone.

The operation relating to audio communication includes a communication starting operation, a telephone directory viewing operation and so forth. The communication starting operation is an operation by the user for listening to the voice of the telephone partner, and when the communication starting operation is performed, there is a high possibility that the user may be in a situation in which the user is going to listen to sound outputted from the speaker of the headset or the earphone. When the telephone directory viewing operation is performed, there is a high possibility that the user may be in a situation in which the user tries to confirm a display image of the display screen provided on the headset or the earphone.

As other operations, an operation for turning on the power to the headset and the earphone main body is available. The other operations, such as the power supply operation for example, are operations that are not associated with a situation in which the user tries to listen to sound outputted from the speaker or another situation in which the user can confirm a display image of the screen.

As operations performed by the user using a vehicle onboard apparatus such as a car navigation system, an operation relating to music reproduction, an operation relating to audio communication and an operation relating to a car navigation function are available. When a reproduction operation that is an operation relating to music reproduction is performed, there is a high possibility that the user may be in a situation in which the user is going to listen to sound outputted from the speaker similarly as in the case of the headset. When a cueing operation of a preceding piece of music, a piece of music being reproduced or a next piece of music is performed, there is a high possibility that the user may be in a situation in which the user tries to confirm a display image on a display screen provided on the vehicle onboard apparatus.

Also in the operation relating audio communication, a communication starting operation is an operation performed by the user to listen to the voice of the telephone partner similarly as in the case of the headset, and when the communication starting operation is performed, there is a high possibility that the user may be in a situation in which the user is going to listen to sound outputted from the speaker provided in the car. When a telephone direction viewing operation is performed, there is a high possibility that the user may be in a situation in which the user tries to confirm a display image of the display screen provided in the proximity of an operation panel.

The operation relating to the car navigation function includes a destination setting operation including route guidance, peripheral search and so forth. Because the operation panel is provided on the screen or in the proximity of the screen, it is considered that there is a high possibility that the user may be able to confirm a display image of the screen. As other operations, an operation for turning on the power to the car navigation system main body is available. The other operations, such as the power supply operation for example, are operations that are not associated with a situation in which the user tries to listen to sound outputted from the speaker or another situation in which the user can confirm a display image of the screen.

As the operation performed by the user using a cordless handset, an operation relating to audio communication, a telephone directory viewing operation, a dialing operation and so forth are available. When the operation relating to audio communication such as a communication starting operation is performed, there is a high possibility that the user may be in a situation in which the user is going to listen to sound outputted from the speaker. When the telephone directory viewing operation is performed, there is a high possibility that the user may be in a situation in which the user tries to confirm a display image of the display screen provided on the cordless handset.

When the dialing operation is performed, there is a high possibility that it may be possible for the user to confirm a display image of the screen. As other operations, an operation for turning on the power to the cordless handset main body is available. The other operations, such as the power supply operation for example, are operations that are not associated with a situation in which the user tries to listen to sound outputted from the speaker or another situation in which the user can confirm a display image of the screen.

As described above, by associating situations of a user and operations to be performed by the user with each other and issuing a notification of unconfirmed information when a particular one of the operations is performed, the user can confirm the unconfirmed information with a high degree of certainty.

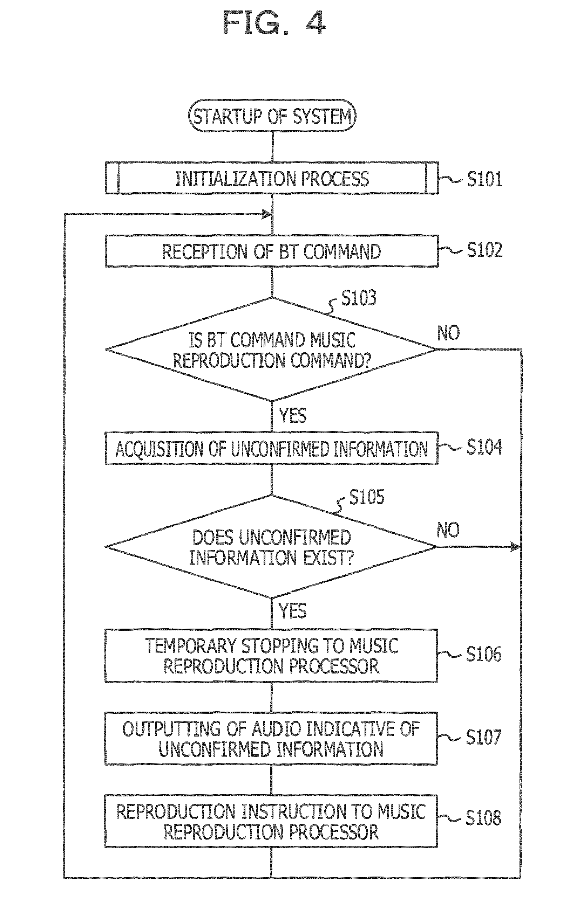

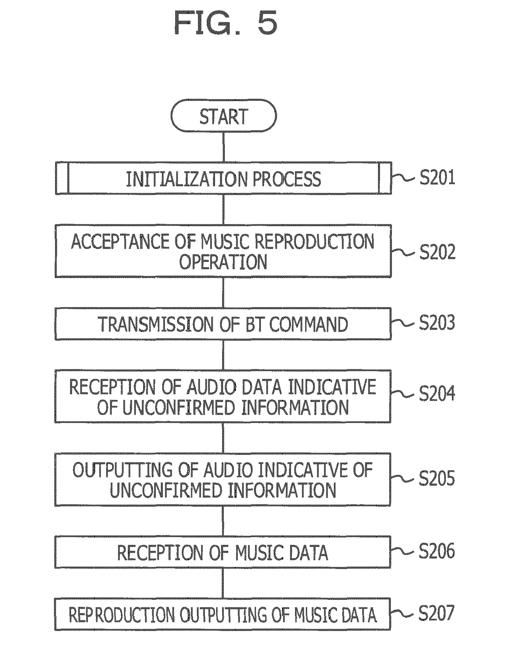

An unconfirmed information notification method is described with reference to FIGS. 4 and 5.

FIG. 4 is an example of a flow chart illustrating an information process of a portable information terminal according to the first embodiment. FIG. 5 is an example of a flow chart illustrating an information process of a communication apparatus according to the first embodiment. The portable information terminal illustrated in FIG. 4 may be the portable information terminal 100 depicted in FIG. 1 and the communication apparatus illustrated in FIG. 5 may be the communication apparatus 200 depicted in FIG. 1.

In the following description of the first embodiment depicted in FIG. 4, information processing of the portable information terminal 100 is described which causes, when an operation relating to music reproduction (a reproduction operation) is performed from the communication apparatus 200 operated by the user to the portable information terminal 100, if there is unconfirmed information such as an unattended incoming call of audio communication, an unread mail, received notification information of the application or the like whose confirmation operation has not been performed by the user of the portable information terminal 100, the communication apparatus 200 to perform outputting audio indicative of the unconfirmed information.

As depicted in FIG. 3, it is considered that, when the operation relating to music reproduction (a reproduction operation) is performed, the user is in a situation in which the user is going to listen to sound outputted from the speaker. Therefore, by outputting unconfirmed information by sound in response to the operation, the probability that the notification of the unconfirmed information may be confirmed by the user can be enhanced.

As depicted in FIG. 4, the BT communication unit 20 performs initialization of a communication process of establishing connection to the communication apparatus 200, performing pairing with the communication apparatus 200 and performing reception and registration of a Bluetooth command (hereinafter referred to as BT command) and so forth (step S101). At this time, the portable information terminal 100 and the communication apparatus 200 confirm a corresponding Bluetooth profile (hereinafter referred to as BT profile) and use BT commands prescribed in the corresponding profile. As the BT profile, a Hands-Free Profile (HFP) used to perform transmission and reception of a telephone call or communication, a HeadSet Profile (HSP) used to perform inputting and outputting of audio between a portable information terminal and a headset or the like, a Dial-Up Network Profile (DUN) used to access the Internet or some other dial-up service via a wireless connection, an Object Push Profile (OPP) used to exchange data of a telephone directory, schedule data and so forth, an Advanced Audio Distribution Profile (A2DP) used to streaming distribute audio data of stereo sound quality, an Audio/Video Remote Control Profile (AVRCP) used to remotely control an operation target apparatus from a remote controller and used to transmit and receive text information such as the title of a music piece and so forth are available.

Then, the BT communication unit 20 receives a BT command from the communication apparatus 200 (step S102). An information process of the communication apparatus 200 is hereinafter described with reference to FIG. 5.

Here, the controller 16 decides whether or not the BT command received by the BT communication unit 20 is a command originating from an operation relating to music reproduction (a reproduction operation) (step S103).

Here, the controller 16 decides whether or not the communication apparatus 200 that performs communication with the portable information terminal 100 is a communication apparatus having particular identification information registered in advance. If the communication apparatus 200 is a communication apparatus having such particular identification information registered in advance, then the controller 16 may perform a next process. The identification information is identification information unique to the apparatus such as, for example, a BTADDR (Bluetooth ADDRess).

If the controller 16 decides that the received BT command is a command originating from an operation relating to music reproduction (a reproduction operation), then the controller 16 controls the audio communication processor 13 and the mail processor 14 to confirm presence or absence of unconfirmed information and controls the unconfirmed information notification unit 15 to acquire such unconfirmed information (step S104). The unconfirmed information notification unit 15 acquires information relating to audio communication such as a number of pieces of unattended incoming communication information, transmission source information of the unattended incoming communications, and a number of pieces of message information of an answering machine and information relating to mails such as a number of unread electronic mails and transmission source information of unread mails and so forth.

If the controller 16 decides that there is unconfirmed information (step S105), then the controller 16 issues a temporarily stopping instruction to the music reproduction processor 12 (step S106).

Then, the controller 16 controls the BT communication unit 20 to cause the communication apparatus 200 to output audio representative of unconfirmed information on the basis of the acquired unconfirmed information (step S107).

Here, a method of causing the communication apparatus 200 to output audio indicative of the acquired unconfirmed information is described. Usually, if the BT communication unit 20 receives a BT command originating from a reproduction operation, then the BT communication unit 20 generates music data in accordance with a BT profile of the BT command originating from the reproduction operation and transmits the generated data to the communication apparatus 200.

At this time, the unconfirmed information notification unit 15 generates audio data indicative of the unconfirmed information in response to the BT profile of the received BT command, and the BT communication unit 20 transmits the generated audio data to the communication apparatus 200 similarly to music data so that the communication apparatus 200 can output the audio data indicative of the unconfirmed information. It is to be noted that, depending upon the type of the BT profile, not only audio data but also video data may be used. A method for causing the communication apparatus 200 to display unconfirmed information when an operation associated with a situation in which the user can confirm a screen display image is performed is hereinafter described in connection with a second embodiment.

Thereafter, the controller 16 issues an instruction to restart reproduction to the music reproduction processor 12 (step S108). The music reproduction processor 12 performs a process relating to music reproduction on the basis of the BT command received from the communication apparatus 200 and performs transmission of music data and so forth. Here, at step S106, the controller 16 may not issue a temporarily stopping instruction, but the communication apparatus 200 may reproduce the audio data indicative of the unconfirmed information in an overlapping relationship with music reproduction.

If the BT command is not a command originating from an operation relating to music reproduction (a reproduction operation) at step S103, then the controller 16 waits until a BT command is received again. The BT command that is a target here is "others, power supply operation, etc." depicted in FIG. 3.

If it is decided at step S105 that there is no unconfirmed information, then the controller 16 waits until a BT command is received again.

Here, not an operation relating to music reproduction (a reproduction operation), but reproduction, stopping, fast reverse, fast forward, sound volume adjustment or the like may be used instead.

A flow chart indicative of information processing of the communication apparatus 200 depicted in FIG. 5 is described.

The short-range wireless communication unit 8 that performs BT communication performs initialization of a communication process for establishing connection to the portable information terminal 100, performing pairing with the portable information terminal 100 and performing reception and registration of a BT command and so forth (step S201). At this time, the portable information terminal 100 and the communication apparatus 200 confirm a corresponding BT profile and use BT commands prescribed in the corresponding profile to transmit and receive data.

The CPU 9 accepts an operation relating to music reproduction by the user (a reproduction operation) (step S202) and controls the short-range wireless communication unit 8 to transmit a BT command relating to an operation for music reproduction (a reproduction operation) to the portable information terminal 100 (step S203).

The short-range wireless communication unit 8 receives the audio data transmitted at step S107 from the portable information terminal 100 (step S204), and the audio processor 10 causes the audio outputting unit 11 to output audio indicative of unconfirmed information using the received audio data (step S205).

Then, the short-range wireless communication unit 8 receives music data transmitted thereto on the basis of an operation relating to music reproduction from the portable information terminal 100 (step S206), and the audio processor 10 causes the audio outputting unit 11 to reproduce and output music data using the received music data (step S207).

Since an operation relating to music reproduction (a reproduction operation) is performed in a situation in which the user is going to listen to sound outputted from the speaker as depicted in FIG. 3, the probability that the user may confirm the notification of the unconfirmed information can be enhanced.

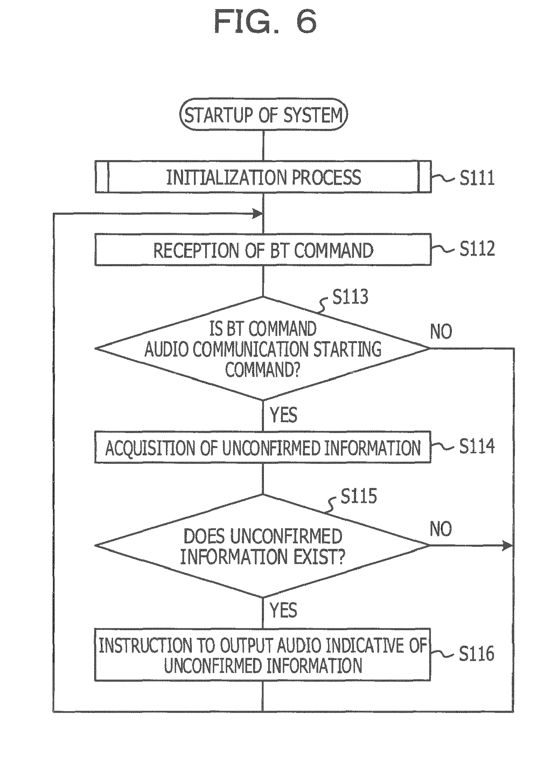

FIG. 6 is another example of a flow chart illustrating an information process of a portable information terminal according to the first embodiment. The portable information terminal illustrated in FIG. 6 may be the portable information terminal 100 depicted in FIG. 1.

In the following description of the first embodiment depicted in FIG. 6, information processing of the portable information terminal 100 is described which causes, when an operation relating to audio communication (a communication starting operation) is performed from the communication apparatus 200 operated by the user to the portable information terminal 100, if there is unconfirmed information such as an unattended incoming call of audio communication, an unread mail, received notification information of the application or the like whose confirmation operation has not been performed by the user of the portable information terminal 100, the communication apparatus 200 to perform an information process for outputting audio indicative of the unconfirmed information.

As depicted in FIG. 3, it is considered that, when the operation relating to audio communication (a communication starting operation) is performed, the user is in a situation in which the user is going to listen to sound outputted from the speaker. Therefore, by outputting unconfirmed information by audio in response to the operation, the probability that the notification of the unconfirmed information may be confirmed by the user can be enhanced.

As depicted in FIG. 6, the BT communication unit 20 performs initialization of a communication process of establishing connection to the communication apparatus 200, performing pairing with the communication apparatus 200 and performing reception and registration of a BT command and so forth (step S111). At this time, the portable information terminal 100 and the communication apparatus 200 confirm a corresponding BT profile and use BT commands prescribed in the corresponding profile to transmit and receive data.

Then, the BT communication unit 20 receives a BT command from the communication apparatus 200 (step S112).

Here, the controller 16 decides whether or not the BT command received by the BT communication unit 20 is a command relating to a communication starting operation (step S113).

If the controller 16 decides that the received BT command is a command relating to a communication starting operation, then the controller 16 controls the audio communication processor 13 and the mail processor 14 to confirm whether or not there is unconfirmed information and controls the unconfirmed information notification unit 15 to acquire such unconfirmed information (step S114). The unconfirmed information notification unit 15 acquires information relating to audio communication such as a number of pieces of unattended incoming communication information, transmission source information of the unattended incoming communications, and a number of pieces of message information of an answering machine and information relating to mails such as a number of unread electronic mails and transmission source information of unread mails and so forth.

If the controller 16 decides that there is unconfirmed information (step S115), then the controller 16 controls the BT communication unit 20 to cause the communication apparatus 200 to output audio representative of the unconfirmed information on the basis of the acquired unconfirmed information (step S116).

At this time, the unconfirmed information notification unit 15 generates audio data representative of the unconfirmed information in response to the BT profile of the received BT command. Consequently, the BT communication unit 20 transmits the audio data to the communication apparatus 200 similarly to the audio data used upon starting of communication so that the audio data representative of the unconfirmed information can be outputted from the communication apparatus 200. The audio data is transmitted to the communication apparatus 200 prior to response to a request by a communication reproduction operation. The controller 16 performs a process relating to audio communication subsequently to the audio outputting.

If the BT command is not a command relating to a communication starting operation at step S113, then the controller 16 waits until a BT command is received again.

If it is decided at step S115 that there is no unconfirmed information, then the controller 16 waits until a BT command is received again.

By outputting audio indicative of unconfirmed information on the basis of a command relating to a audio communication starting operation, it is possible to allow the user to confirm a notification of the unconfirmed information with a higher degree of certainty. Further, before audio communication is started, it is possible for the user to confirm that unattended incoming call or the like has been received.

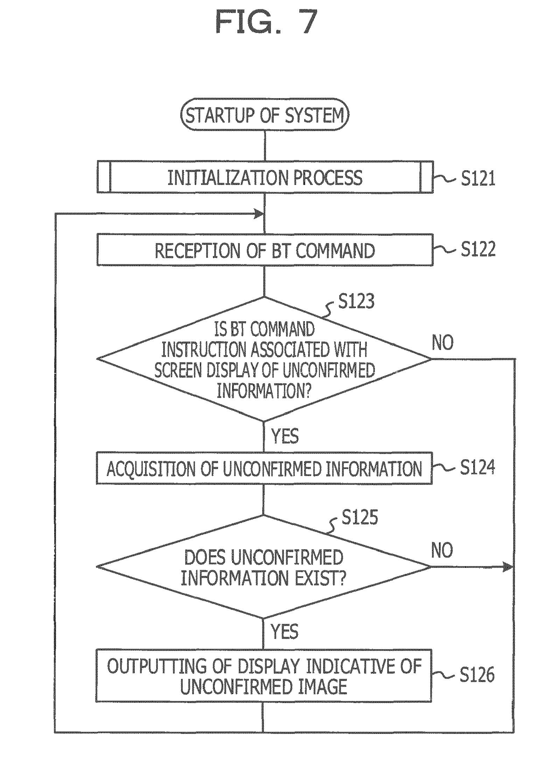

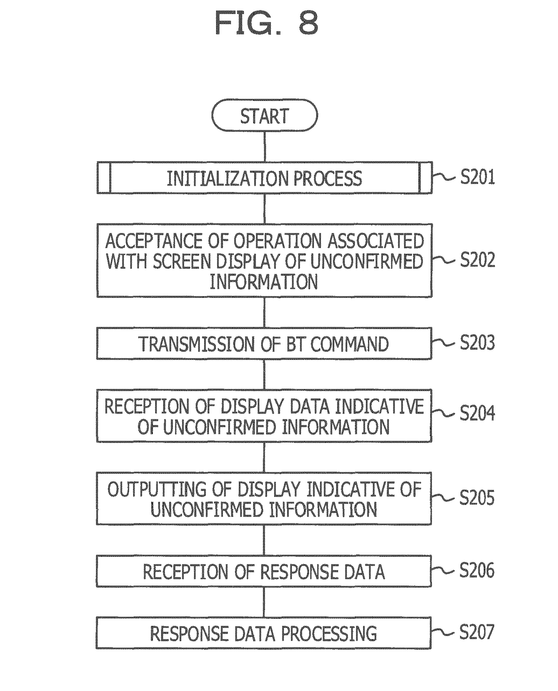

FIG. 7 is an example of a flow chart illustrating an information process of a portable information terminal according to a second embodiment. FIG. 8 is an example of a flow chart illustrating an information process of a communication apparatus according to the second embodiment. The portable information terminal illustrated in FIG. 7 may be the portable information terminal 100 depicted in FIG. 1 and the communication apparatus illustrated in FIG. 8 may be the communication apparatus 200 depicted in FIG. 1.

In the following description of the second embodiment illustrated in FIG. 7, information processing of the portable information terminal 100 is described which causes, when an operation associated with a situation in which the user can confirm a screen display image is performed from the communication apparatus 200 operated by the user to the portable information terminal 100, if there is unconfirmed information such as an unattended incoming call of audio communication, an unread mail, received notification information of the application or the like whose confirmation operation has not been performed by the user of the portable information terminal 100, the communication apparatus 200 to perform indicating the unconfirmed information. The operation associated with a situation in which the user can confirm a screen display image includes reproduction of music data, cueing of a preceding piece of music, a piece of music being reproduced or a next piece of music, a telephone directory viewing operation, a destination setting operation such as route guidance, peripheral search and so forth or a like operation, which are associated with situations in which a screen display image can be confirmed as illustrated in FIG. 3.

As illustrated in FIG. 7, the BT communication unit 20 performs initialization of a communication process of establishing connection to the communication apparatus 200, performing pairing with the communication apparatus 200 and performing reception and registration of a BT command and so forth (step S121). At this time, the portable information terminal 100 and the communication apparatus 200 confirm a corresponding BT profile and use BT commands prescribed in the corresponding profile to transmit and receive the data.

Then, the BT communication unit 20 receives a BT command from the communication apparatus 200 (step S122). Information processing of the communication apparatus 200 is hereinafter described with reference to FIG. 8.

Here, the controller 16 decides whether or not the BT command received by the BT communication unit 20 is a command relating to an operation associated with a situation in which the user can confirm a screen display image (step S123).

If the controller 16 decides that the received BT command is a command relating to an operation associated with a situation in which the user can confirm a screen display image, then the controller 16 controls the audio communication processor 13 and the mail processor 14 to confirm whether or not there is unconfirmed information and controls the unconfirmed information notification unit 15 to acquire such unconfirmed information (step S124). The unconfirmed information notification unit 15 acquires information relating to audio communication such as a number of pieces of unattended incoming communication information, transmission source information of the unattended incoming communications, and a number of pieces of message information of an answering machine and information relating to mails such as a number of unread electronic mails and transmission source information of unread mails and so forth.

If the controller 16 decides that there is unconfirmed information (step S125), then the controller 16 controls the BT communication unit 20 to cause the communication apparatus 200 to output display data representative of the unconfirmed information on the basis of the acquired unconfirmed information (step S126).

Here, if reproduction of music data, cueing of a preceding piece of music, a piece of music being reproduced or a next piece of music, a telephone directory viewing operation, a destination setting operation such as route guidance, peripheral search and so forth or a like operation is performed on the communication apparatus 200, then the communication apparatus 200 may not be in a state in which the communication apparatus 200 waits for reproduction outputting of audio data or display of text data representative of unconfirmed information.

At this time, the unconfirmed information notification unit 15 generates a BT command for causing the communication apparatus 200 to compulsorily perform audio outputting or text display like, for example, an incoming event notification based on the HFP so that the communication apparatus 200 performs audio outputting or text display.

If the BT command is not a command relating to an operation associated with a situation in which the user can confirm a screen display image at step S123, then the controller 16 waits until the controller 16 receives a BT command again.

If it is decided at step S125 that there is no unconfirmed information, then the controller 16 waits until the controller 16 receives a BT command again.

A flow chart representative of information processing of the communication apparatus 200 illustrated in FIG. 8 is described.

The short-range wireless communication unit 8 that performs BT communication performs initialization of a communication process of establishing connection to the portable information terminal 100, performing pairing with the portable information terminal 100 and performing reception and registration of a Bluetooth command and so forth (step S208).

The CPU 9 accepts an operation associated with unconfirmed information screen display on the portable information terminal 100 (step S209) and controls the short-range wireless communication unit 8 to transmit a BT command relating to the operation associated with unconfirmed information screen display to the portable information terminal 100 (step S210).

The short-range wireless communication unit 8 receives display data for the notification of unconfirmed information transmitted at step S114 from the portable information terminal 100 (step S211) and causes a display image for the notification of the unconfirmed information to be outputted (step S212).

Then, the short-range wireless communication unit 8 receives response data to the operation from the portable information terminal 100 (step S213) and performs a process using the response data (step S214).

Since the operation associated with unconfirmed information screen display is performed in a situation in which the user can see a screen display image as illustrated in FIG. 3, the probability that the notification of the unconfirmed information may be confirmed by the user can be enhanced.

It is to be noted that the first embodiment and the second embodiment have been described assuming a communication apparatus that performs short-range wireless communication with a portable telephone terminal, the present embodiment is not limited to this, but it is a matter of course that also a communication apparatus that is connected to a portable information terminal by wire connection and performs information communication is a target of the present embodiment in that the communication apparatus can perform an operation of the portable telephone terminal while the user does not see the screen of the portable telephone terminal.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. An electronic apparatus, comprising:
a communication circuitry that performs communication with a communication apparatus;
a memory; and
a processor coupled to the memory, configured to
perform information processing, and
perform, when the processor receives a signal relating to a first operation different from a signal relating to a second operation for performing confirmation of unconfirmed information that is information unconfirmed by a user from within the information processing from the communication apparatus through the communication circuitry, selection of whether control for causing the communication apparatus to issue an audio notification of the unconfirmed information is to be performed or control for causing the communication apparatus to display the unconfirmed information on a screen of the communication apparatus is to be performed on the basis of contents of the first operation.

2. The electronic apparatus according to claim 1, further comprising:
a storage, wherein
the storage stores therein a table in which the first operation is associated with a situation in which the audio notification can be confirmed or a situation in which the screen display can be confirmed; and
the processor is configured to refer to the table to perform the selection of whether the control for causing the communication apparatus to issue an audio notification of the unconfirmed information is to be performed or the control for causing the communication apparatus to display the unconfirmed information on the screen of the communication apparatus is to be performed on the basis of the contents of the first operation.

3. The electronic apparatus according to claim 1 or 2, wherein, when the first operation is a music reproduction operation, the processor is configured to perform the control for causing the communication apparatus to issue an audio notification of the unconfirmed information.

4. The electronic apparatus according to any of claims 1 to 3, wherein, when the first operation is a communication starting operation, the processor is configured to perform the control for causing the communication apparatus to issue an audio notification of the unconfirmed information.

5. The electronic apparatus according to any of claims 1 to 4, wherein, when the first operation is an operation associated with a situation in which the screen display can be confirmed, the processor is configured to perform control for causing the communication apparatus to display a notification of the unconfirmed information.

6. The electronic apparatus according to any of claims 1 to 5, wherein, when the processor selects to perform the control for causing the communication apparatus to issue an audio notification of the unconfirmed information,
if the contents of the first operation are an instruction to cause the communication apparatus to transmit audio,
then the processor is configured to generate an audio signal indicative of the unconfirmed information in accordance with a communication method of a signal requested by the signal relating to the first operation and transmits the audio signal to the communication apparatus.

7. The electronic apparatus according to any of claims 1 to 6, wherein, when the processor selects to perform the control for causing the communication apparatus to display the unconfirmed information on the screen,
if the contents of the first operation are an instruction to cause the communication apparatus to transmit audio,
then the processor is configured to generate a response signal including a display signal indicative of the unconfirmed information in accordance with a communication method of a signal requested by the signal relating to the first operation and transmits the response signal to the communication apparatus.

8. The electronic apparatus according to any preceding claim, wherein the processor is configured to perform the selection of whether the control for causing the communication apparatus to issue an audio notification of the unconfirmed information is to be performed or the control for causing the communication apparatus to display the unconfirmed information on the screen of the communication apparatus is to be performed, and
the processor is configured to generate a signal for causing the communication apparatus, which uses a communication method by which the communication apparatus can communicate with the electronic apparatus, to compulsorily perform audio outputting or screen image display of the unconfirmed information and transmits the signal to the communication apparatus.

9. A notification method, comprising:
performing, when a signal relating to a first operation different from a signal relating to a second operation for performing confirmation of unconfirmed information that is information unconfirmed by a user is received from a communication apparatus, selection of whether control for causing the communication apparatus to issue an audio notification of the unconfirmed information is to be performed or control for causing the communication apparatus to display the unconfirmed information on a screen of the communication apparatus is to be performed on the basis of contents of the first operation.

10. A machine readable medium storing a program that, when executed by a processor, causes the processor to perform operations comprising:
performing, when a signal relating to a first operation different from a signal relating to a second operation for performing confirmation of unconfirmed information that is information unconfirmed by a user is received from a communication apparatus, selection of whether control for causing the communication apparatus to issue an audio notification of the unconfirmed information is to be performed or control for causing the communication apparatus to display the unconfirmed information on a screen of the communication apparatus is to be performed on the basis of contents of the first operation.

11. A computer program containing program code that, when executed by a processor, causes the processor to perform operations comprising:
performing, when a signal relating to a first operation different from a signal relating to a second operation for performing confirmation of unconfirmed information that is information unconfirmed by a user is received from a communication apparatus, selection of whether control for causing the communication apparatus to issue an audio notification of the unconfirmed information is to be performed or control for causing the communication apparatus to display the unconfirmed information on a screen of the communication apparatus is to be performed on the basis of contents of the first operation.
